(19) Europäisches Patentamt
European Patent Office
Office européen des brevets

(11) EP 3 725 738 A1

(12) DEMANDE DE BREVET EUROPEEN

(43) Date de publication:
**21.10.2020 Bulletin 2020/43**

(51) Int Cl.:
***C01B 3/00*** *(2006.01)* ***C01B 3/22*** *(2006.01)*

(21) Numéro de dépôt: **20169885.9**

(22) Date de dépôt: **16.04.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **19.04.2019 FR 1904221**

(71) Demandeur: **Commissariat à l'Energie Atomique et aux Energies Alternatives**
**75015 Paris (FR)**

(72) Inventeurs:
- **CHAPPAZ, Alban**
**38054 GRENOBLE Cedex 09 (FR)**
- **BENGAOUER, Alain**
**38054 GRENOBLE Cedex 09 (FR)**

(74) Mandataire: **Nony**
**11 rue Saint-Georges**
**75009 Paris (FR)**

# (54) UTILISATION DE LIQUIDES ORGANIQUES HYDROGENES NOTAMMENT DANS DES DISPOSITIFS DE CONVERSION D'ENERGIE

(57) L'invention se rapporte à l'utilisation dans des dispositifs de conversion d'énergie électrochimique ou par combustion, dans un procédé industriel de méthanation ou un procédé d'hydrogénation de coupes pétrolières, d'au moins un composé aliphatique possédant au moins deux groupements hydroxyles dont au moins un groupement hydroxyle primaire (dit LOHC hydrogéné), à titre de source renouvelable en hydrogène.

EP 3 725 738 A1

## Description

### Domaine technique

La présente invention concerne le domaine des liquides organiques hydrogénés (LOHC) et vise à proposer de nouveaux LOHC pour le stockage et le transport de l'hydrogène. Ces liquides organiques hydrogénés sont notamment utiles à titre de source en hydrogène. Par exemple, l'hydrogène ainsi véhiculé peut être exploité en tant que source d'énergie décarbonée soit par combustion soit dans des dispositifs de conversion d'énergie électrochimique comme les piles à combustible. Ce même hydrogène peut être également utilisé en tant que molécule réductrice dans des procédés industriels.

Parmi les différentes solutions dédiées à réduire la part d'énergies fossiles dans le mix énergétique mondial, l'hydrogène est aujourd'hui reconnu comme un vecteur décarboné de choix. Cependant, des limitations existent toujours quant à son transport et son stockage.

Certes, le principe de stocker / transporter l'hydrogène grâce à un vecteur liquide est décrit depuis une vingtaine d'années. En particulier, des liquides organiques hydrogénés (LOHC) sont déjà considérés à ces fins. Dans le principe, l'hydrogène est fixé sur le liquide organique pauvre en atomes d'hydrogène (LOHC déshydrogéné) grâce à une réaction d'hydrogénation pour produire un liquide organique riche en atomes d'hydrogène (LOHC hydrogéné) qui doit être un liquide stable dans les conditions ambiantes et donc transportable et stockable. Le liquide organique riche en atomes d'hydrogène est ensuite déshydrogéné dans une seconde réaction afin de régénérer l'hydrogène et le liquide organique pauvre en atomes d'hydrogène. Avantageusement, ces LOHC sont donc aptes à être hydrogénés et déshydrogénés de manière réversible en présence d'un catalyseur. En outre, grâce à leur forte densité volumétrique (50-70 g d'hydrogène par litre de LOHC hydrogéné) et teneur massique (5-8 % massique d'hydrogène dans le LOHC hydrogéné) et à leur stabilité dans les conditions ambiantes il est possible de les transporter et de les stocker dans de simples réservoirs, citernes ou pipelines.

A titre illustratif de ces liquides aptes à véhiculer de l'hydrogène peuvent notamment être cités des hydrocarbures aromatiques et des composés hétéro-aromatiques de la famille des carbazoles [1].

Les hydrocarbures aromatiques sont tout particulièrement le benzène, le toluène, le naphtalène, les dérivés biphényles, les benzyltoluènes dont les dibenzyltoluènes (DBT). Ils forment, sous leur forme hydrogénée, des alcanes cycliques. Ces composés ont l'avantage de posséder une plage importante de température pour leur mise en œuvre sous forme liquide, par exemple de -40°C à plus de 300°C pour le couple dibenzyltoluène/perhydrodibenzyltoluène. De plus, ces composés aromatiques, ainsi que leurs alcanes cycliques présentent une grande stabilité. Enfin, certains composés aromatiques comme le toluène sont produits mondialement à des échelles significatives (25 Mt/an pour le toluène) permettant d'envisager rapidement un développement de ce type de transport pour l'hydrogène. Leur hydrogénation est opérée à haute pression et température modérée (exemple du DBT : 40-80 bar, 180°C, -71 kJ/mol$H_2$) alors que la déshydrogénation est réalisée à pression atmosphérique et plus haute température (exemple du DBT : 1 bar, 300°C, 71 kJ/mol$H_2$). L'ensemble des hydrocarbures aromatiques permettent ainsi d'atteindre une teneur massique de stockage de l'hydrogène entre 6,2 et 7,3 % et une densité volumétrique comprise entre 40 et 70 g/L. En particulier, des premières unités pilotes ont été réalisées avec le dibenzyltoluene (DBT) ou le toluène à titre de LOHC.

En ce qui concerne les composés hétéro-aromatiques de la famille des carbazoles, les composés les plus fréquents sont le N-éthyl-carbazole (NEC) et les dérivés furanes, pyrroles et indoles. Dans ce cas, la réaction d'hydrogénation conduit à des amines cycliques ou des éthers cycliques. L'hydrogénation est généralement opérée à haute pression et température modérée (exemple du NEC : 50-80 bar, 120-180°C, -53 kJ/mol$H_2$) alors que la déshydrogénation est réalisée à pression atmosphérique et plus haute température (exemple du NEC : 1 bar, 250°C, 53 kJ/mol$H_2$). L'ensemble des composés hétéro-aromatiques permettent d'atteindre une teneur massique de stockage de l'hydrogène entre 4,1 et 7,1 % et une densité volumétrique comprise entre 30 et 70 g/L.

Par ailleurs, le document US 2017 / 0283257 propose d'utiliser, à titre de liquides organiques hydrogénés LOHC, des diaminoalcanes et des monoalcools.

Quant au brevet US 8 338 055, il propose pour sa part un système de conversion et de stockage d'énergie électrochimique. Plus précisément, il tire profit de l'énergie générée par l'oxydation de liquides organiques hydrogénés LOHC, à deux groupement hydroxyles secondaires, comme notamment les 2,3-butanediol, 2,4-pentanediol, 2,5-hexanediol ou cyclohexanediol, pour produire de l'électricité sans générer de l'hydrogène. Les composés pauvres en atomes d'hydrogène ainsi générés sont des dérivés cétoniques.

Toutefois, l'ensemble de ces composés ne donnent pas totalement satisfaction.

Ainsi, les seuls catalyseurs performants utilisés lors des réactions d'hydrogénation et déshydrogénation des LOHC présentés ci-dessus sont à base de platine, iridium, rhodium, ruthénium ou palladium. Or, ces métaux sont peu disponibles sur la planète et, par conséquent très chers. Quelques alternatives utilisant des catalyseurs à base de nickel ont été proposées mais leur faible activité (300 à 3000 fois plus faible que des catalyseurs à base de ruthénium) [2] est un obstacle à leur utilisation dans un contexte industriel.

Par ailleurs, la déshydrogénation des vecteurs LOHC riches en atomes d'hydrogène conventionnels consomme au minimum 17% (NEC) à 25% (DBT) du pouvoir calorifique supérieur (PCS) de l'hydrogène libéré (en ne prenant en compte que l'enthalpie de réaction). Par conséquent, la recherche d'un procédé énergétiquement viable nécessite d'envisager une intégration thermique qui limite l'usage de ces composés. Dans le cas où cette intégration thermique ne serait pas opérée, le rendement énergétique des LOHC ne se démarquerait pas de celui d'autres solutions de transport comme l'hydrogène comprimé ou liquéfié.

Enfin, ces liquides organiques sont pour l'essentiel dérivés de produits pétroliers. Par conséquent, l'hydrogène transporté par ces vecteurs ne peut pas être considéré comme parfaitement décarboné.

## Exposé de l'invention

La présente invention a précisément pour objet de proposer de nouveaux liquides organiques hydrogénés (LOHC) utiles pour le transport et le stockage de l'hydrogène qui soient notamment dénués des inconvénients précités.

A des fins de clarté, le terme hydrogène est utilisé dans la présente invention pour faire référence au dihydrogène, c'est-à-dire à l'hydrogène gazeux, sauf s'il est précisé qu'il s'agit de l'atome d'hydrogène.

Ainsi la présente invention concerne des liquides organiques hydrogénés (LOHC) dont les réactions d'hydrogénation et de déshydrogénation sont réalisables avec des catalyseurs plus disponibles et moins chers que les métaux platinoïdes.

La présente invention a également pour objectif de proposer des liquides organiques hydrogénés (LOHC) dont l'enthalpie de déshydrogénation est inférieure à 45 kJ/mol$H_2$, de préférence inférieure à 40 kJ/mol$H_2$ et en particulier inférieure à 36 kJ/mol$H_2$.

Elle a également pour objectif de proposer des liquides organiques hydrogénés (LOHC) dont au moins un des composés du couple LOHC déshydrogéné/LOHC hydrogéné est synthétisable à partir d'une ressource renouvelable.

Ainsi, un des aspects de la présente invention concerne l'utilisation d'au moins un composé aliphatique possédant au moins deux groupements hydroxyles dont au moins un groupement hydroxyle primaire, à titre de liquide organique hydrogéné (LOHC).

Plus précisément, elle se rapporte à l'utilisation dans des dispositifs de conversion d'énergie électrochimique ou par combustion, dans un procédé industriel de méthanation ou un procédé d'hydrogénation de coupes pétrolières d'au moins un composé aliphatique possédant au moins deux groupements hydroxyles dont au moins un groupement hydroxyle primaire, à titre de source renouvelable en hydrogène.

Dans le cadre de l'invention, le composé aliphatique est donc mis en œuvre essentiellement pour générer de l'hydrogène par opposition à d'autres applications discutées dans le préambule.

Contre toute attente, les inventeurs ont mis en évidence que de tels composés aliphatiques s'avèrent particulièrement intéressants à titre de liquides organiques hydrogénés LOHC et donc pour le transport et le stockage d'hydrogène.

Comme illustré dans les exemples qui suivent, les composés aliphatiques possédant au moins deux groupements hydroxyles selon l'invention possèdent notamment une teneur massique de stockage de l'hydrogène entre 2 et 5 %, de préférence entre 3,2 et 4,5 %, par rapport à leur poids total. Ils sont ainsi aptes à générer par déshydrogénation catalytique des teneurs massiques et volumiques en hydrogène satisfaisantes voire supérieures à celles générées par certains LOHC conventionnels.

Leur enthalpie de déshydrogénation est en outre nettement plus faible que celle des composés décrits jusqu'alors, ce qui conduit à limiter la perte énergétique de la réaction. Notamment, l'enthalpie de déshydrogénation peut être inférieure à 36 kJ/mol et permet ainsi de consommer moins de 12,5% du PCS de l'hydrogène transporté.

Réciproquement, les inventeurs ont mis en évidence que les produits de déshydrogénation de ces LOHC s'avèrent particulièrement intéressants pour leur capacité à s'hydrogéner catalytiquement et réversiblement en ces composés aliphatiques comprenant au moins deux groupements hydroxyles dont au moins un groupement hydroxyle primaire.

L'invention met donc à profit des couples « LOHC déshydrogéné/ LOHC hydrogéné» et dont le liquide organique hydrogéné (LOHC) est un composé aliphatique possédant au moins deux groupements hydroxyles dont au moins un groupement hydroxyle primaire.

Avantageusement, la barrière énergétique à franchir entre ces composés étant faible, ces réactions d'hydrogénation peuvent être catalysées par des métaux plus disponibles et les conditions opératoires sont plus douces.

Enfin, au moins un des composés des couples LOHC déshydrogéné/LOHC hydrogéné convenant à l'invention peut être synthétisé à partir d'une ressource renouvelable.

La présente invention décrit également un procédé pour générer de l'hydrogène par déshydrogénation catalytique d'un liquide organique hydrogéné (LOHC) représenté par un composé aliphatique possédant au moins deux groupements hydroxyles dont au moins un groupement hydroxyle primaire.

Elle décrit aussi un procédé pour transporter et/ou stocker de l'hydrogène mettant en œuvre au moins un

composé aliphatique possédant au moins deux groupements hydroxyles dont au moins un groupement hydroxyle primaire à titre de liquide organique hydrogéné (LOHC).

Selon une variante préférée, les procédés de l'invention mettent en œuvre à titre de couple LOHC déshydrogéné/LOHC hydrogéné, un couple choisi parmi les γ-butyrolactone (GBL)/1,4-butanediol (BDO), Anhydride succinique/1,4-butanediol, γ-valerolactone (GVL)/1,4-pentanediol (PDO), lévulinate de méthyle/1,4-pentanediol, δ-valerolactone/1,5-pentanediol, alcool furfurylique/1,5-pentanediol, 2-hydroxytetrahydropyrane/1,5-pentanediol, ε-caprolactone/1,6-hexanediol et 1,2,6-hexanetriol/1,6-hexanediol.

Selon une autre variante, la présente invention se rapporte à l'utilisation dans des procédés d'hydrogénation d'au moins un composé aliphatique possédant au moins deux groupements hydroxyles dont au moins un groupement hydroxyle primaire, à titre de source renouvelable en hydrogène.

Selon encore un autre de ses aspects, la présente invention se rapporte à l'utilisation à titre de carburant, d'au moins un composé aliphatique possédant au moins deux groupements hydroxyles dont au moins un groupement hydroxyle primaire.

## Description détaillée

COMPOSE LOHC HYDROGENE CONFORME A L'INVENTION

Comme précisé ci-dessus, ce composé est un composé aliphatique possédant au moins deux groupements hydroxyles dont au moins un groupement hydroxyle primaire.

Au sens de l'invention, le terme composé aliphatique désigne un composé organique hydrocarboné linéaire ou ramifié qui n'est pas cyclique. Avantageusement, à l'exception de ses fonctions hydroxyles, il est exclusivement constitué d'atomes de carbone et d'hydrogène.

Il peut être saturé ou insaturé et est avantageusement saturé.

De préférence il s'agit d'un composé aliphatique saturé en $C_3$ à $C_{12}$ et plus particulièrement en $C_4$ à $C_6$.

Il peut être linéaire ou ramifié et de préférence est linéaire.

Selon une première variante, il possède un unique groupement hydroxyle primaire.

Ainsi, il peut posséder avantageusement un groupement hydroxyle primaire et un groupement hydroxyle secondaire.

Selon une seconde variante, il possède uniquement deux groupements hydroxyles primaires c'est-à-dire en extrémités du squelette aliphatique du composé.

A titre illustratif de ces composés peuvent être tout particulièrement cités les 1,4-butanediol, 1,4-pentanediol, 1,5-pentanediol et 1,6-hexanediol.

Comme précisé ci-dessus, les composés aliphatiques selon l'invention possèdent une enthalpie de déshydrogénation inférieure à 45 kJ/mol$H_2$, de préférence inférieure à 40 kJ/mol$H_2$ et en particulier inférieure à 36 kJ/mol$H_2$.

Ainsi, une enthalpie inférieure à 36 kJ/mol$H_2$ permet avantageusement de consommer moins de 16 %, de préférence moins de 12.5%, du PCS de l'hydrogène transporté.

Les composés aliphatiques selon l'invention possèdent en outre de préférence une densité volumétrique de l'hydrogène variant de 30 g/L à 50 g/L ou encore une teneur massique en hydrogène variant de 2 % à 5%.

Au sens de l'invention la densité volumétrique est calculée pour 1 litre de vecteur hydrogéné par la formule suivante :

[Math 1]

$$Densité\ volumétrique\ H2\ (g/L) = \frac{\text{masse H2 libérée par le LOHC hydrogéné (g)}}{\text{Volume total du LOHC hydrogéné (L)}}$$

Au sens de l'invention, la teneur massique en hydrogène est déterminée par la formule suivante :

[Math 2]

$$teneur\ massique\ en\ H2\ (\%) = 100\ \text{x}\ \frac{\text{masse H2 libérée par le LOHC hydrogéné (g)}}{\text{m totale du LOHC hydrogéné (g)}}$$

Parmi les liquides organiques hydrogénés (LOHC) selon l'invention, le 1,4 butanediol s'avère tout particulièrement intéressant.

Ce composé possède certes des densité volumétrique et teneur massique en hydrogène respectivement de 47 g/L et 4,5 %, ce qui le situe dans la fourchette basse des densités ou teneurs des vecteurs LOHC. En revanche, son enthalpie de déshydrogénation (31 kJ/mol$H_2$) est plus faible que celle des LOHC conventionnels et ses catalyseurs de déshydrogénation peuvent être choisis parmi des catalyseurs non platinoïdes. En outre, il peut être avantageusement synthétisé à partir d'acide succinique qui peut être issu de ressources renouvelables.

Ainsi, l'acide succinique est produit par fermentation de sucres issus de la biomasse tels que l'amidon, le saccharose ou le glucose. De nombreux microorganismes (bactéries comme Escherichia Coli souches AFP111 et AFP184, ou des levures comme Saccharomyces Cerevisiae) ont été modifiés afin de produire sélectivement l'acide succinique. Le procédé utilisé dans l'ensemble des cas est une fermentation batch à un pH et une température qui varient en fonction des microorganismes. L'acide succinique biosourcé ainsi obtenu peut ensuite être réduit en γ-butyrolactone (GBL) ou 1,4-butanediol (BDO) par des procédés connus dans l'état de l'art (F. J. Broecker, M. Schwarzmann, 1977, US4048193).

Un composé aliphatique comprenant au moins deux groupements hydroxyles dont au moins un groupement hydroxyle primaire selon l'invention est apte à être déshydrogéné catalytiquement.

Il peut notamment être déshydrogéné en hydrogène et en lactones, esters, cétones, aldéhydes, alcools, éthers, acides carboxyliques ou encore en anhydrides, de préférence en lactones, esters, aldéhydes, alcools ou éthers.

A titre illustratif des liquides organiques déshydrogénés susceptibles d'être générés à partir d'un composé aliphatique conforme à l'invention peuvent notamment être cités les γ-valerolactone, 4-hydroxybutanal, δ-valerolactone, alcool furfurylique, ε-caprolactone, et γ-butyrolactone (GBL).

Ces composés ont en outre l'avantage d'être, pour l'essentiel, accessibles à partir de produits issus de la biomasse. Ainsi, l'acide lévulinique est produit par catalyse acide à partir de sucres issus de la biomasse tels que la cellulose, l'amidon, le saccharose ou le glucose. Le γ-butyrolactone peut être également synthétisé à partir d'acide succinique issu de ressources renouvelables.

Bien entendu, ces composés aliphatiques déshydrogénés sont en retour aptes à regénérer par hydrogénation catalytique un composé aliphatique hydroxylé conforme selon l'invention.

A titre représentatif des couples LOHC déshydrogéné/ LOHC hydrogéné convenant tout particulièrement à l'invention peuvent notamment être cités les couples suivants :

[Tableau 1]

| Vecteur déshydrogéné | Vecteur hydrogéné |
|---|---|
| γ-butyrolactone (GBL) | 1,4-butanediol (BDO) |
| Anhydride succinique | 1,4-butanediol |
| γ-valerolactone(GVL) | 1,4-pentanediol (PDO) |
| Lévulinate de méthyle | 1,4-pentanediol |
| δ-valerolactone | 1,5-pentanediol |
| Alcool furfurylique | 1,5-pentanediol |
| 2-hydroxytetrahydropyrane | 1,5-pentanediol |
| ε-caprolactone | 1,6-hexanediol |
| 1,2,6-hexanetriol | 1,6-hexanediol |

De préférence, le liquide LOHC hydrogéné du couple LOHC déshydrogéné/LOHC hydrogéné est un composé aliphatique saturé en $C_3$ à $C_{12}$ et plus particulièrement en $C_4$ à $C_6$.

Enfin et comme précisé ci-dessus les composés LOHC selon l'invention ont en outre pour net intérêt de ne pas requérir la mise en œuvre de catalyseur de type métaux platinoïdes particulièrement onéreux.

Au regard du choix du catalyseur retenu pour réaliser les réactions d'hydrogénation et de déshydrogénation, il est possible d'ajuster la nature chimique des liquides organiques hydrogénés et déshydrogénés formés.

Un composé aliphatique conforme à l'invention est avantageux pour le transport et/ou le stockage d'hydrogène.

Un tel composé peut être généré par hydrogénation catalytique, c'est-à-dire une hydrogénation réalisée en présence d'un catalyseur, d'un LOHC pauvre en atomes d'hydrogène notamment tel que défini ci-dessus.

Généralement, le LOHC pauvre en atomes d'hydrogène, est préchauffé au sein d'un réacteur, à une température pouvant varier de 100°C à 260°C, puis mélangé à l'hydrogène à la pression de la réaction et l'ensemble est injecté dans un réacteur lit fixe, chargé en catalyseur. L'hydrogène et le LOHC pauvre en atomes d'hydrogène peuvent également être alimentés directement séparément dans le réacteur.

Cette réduction est exothermique. Par exemple pour le couple GBL-BDO le ΔH est égal à -30,8 kJ/mol$H_2$, et pour le couple GVL-PDO, le ΔH est égal à -35,5 kJ/mol$H_2$. Cette réduction est donc favorisée par l'utilisation de réacteurs isothermes, limitant les inhomogénéités de température.

Par ailleurs, l'énergie dégagée par la réaction sous forme de chaleur peut être avantageusement utilisée pour préchauffer les réactifs.

A la sortie du réacteur, les liquides produits sont séparés de l'hydrogène non réagi par une séparation gaz/liquide.

Les procédés peuvent être opérés en réacteurs batch ou semi-batch voire en continu dans des réacteurs de type « slurry », « trickle bed », lit fluidisé ou lit fixe.

D'une manière générale la réaction d'hydrogénation est réalisée à une température variant de 100 à 300°C, de préférence de 100 à 260°C.

La pression peut varier de 10 à 280 bar (ou 1 à 28 MPa).

Bien entendu, le couple pression et température est ajusté selon la nature du couple LOHC déshydrogéné/LOHC hydrogéné.

Le choix du catalyseur est généralement réalisé en tenant compte de la nature du couple LOHC déshydrogéné/ LOHC hydrogéné considéré.

Le tableau 2 ci-après suggère ainsi des catalyseurs efficaces pour réaliser les hydrogénations précisées également dans ce tableau.

[Tableau 2]

| LOHC déshydrogéné | catalyseur | LOHC hydrogéné |
|---|---|---|
| y-butvrolactone (GBL) | Cu/ZnO ou $ZnCl_2$ | 1,4-butanediol (BDO) |
| Anhydride succinique | Ni + Cu/ZnO | 1,4-butanediol |
| γ-valerolactone(GVL) | Cu/ZnO ou Cu/$ZrO_2$ | 1,4-pentanediol (PDO) |
| Lévulinate de méthyle | Cu/$ZrO_2$ | 1,4-pentanediol |
| δ-valerolactone | CuO/$Cr_2O_3$ | 1,5-pentanediol |
| Alcool furfurylique | Cu/$Cr_2O_4$ ou Cu-$Mg_3AlO_{4,5}$ | 1,5-pentanediol |
| 2-hydroxytetrahydropyrane | Cu/$Cr_2O_4$ | 1,5-pentanediol |
| ε-caprolactone | CuO/$Cr_2O_3$ (+MnO,BaO) | 1,6-hexanediol |
| 1,2,6-hexanetriol | CuCr | 1,6-hexanediol |

Dans le cas de la γ-butyrolactone (GBL) ou γ-valerolactone (GVL), l'hydrogénation peut être plus précisément réalisée dans les conditions opératoires illustrées ci-après.

[Chem 1]

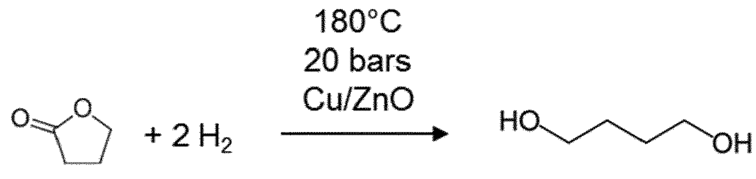


γ-butyrolactone 1,4-butanediol

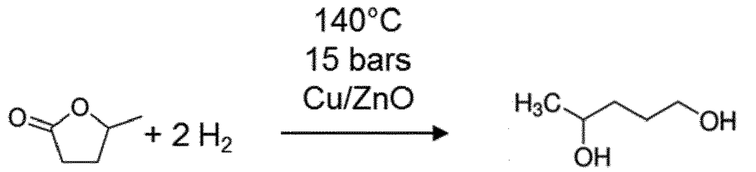


γ-valerolactone 1,4-pentanediol

PROCEDE POUR GENERER DE L'HYDROGENE

Cette génération d'hydrogène est réalisée par déshydrogénation catalytique, c'est-à-dire une déshydrogénation réalisée en présence d'un catalyseur, d'un composé aliphatique possédant au moins deux fonctions hydroxyles dont au moins une fonction hydroxyle primaire, conforme à l'invention.

De manière générale, ce composé aliphatique est préchauffé à la température de la réaction et injecté dans un réacteur lit fixe, chargé en catalyseur. A la sortie du réacteur, les liquides produits sont séparés de l'hydrogène par séparation gaz/liquide. Les procédés peuvent être opérés en réacteurs batch, semi-batch ou continu.

Cette réaction de déshydrogénation est endothermique et nécessite donc un apport de chaleur afin de maintenir les conditions opératoires nécessaires à la réaction.

Toutefois, le niveau des enthalpies observées pour la déshydrogénation des composés aliphatiques comportant au moins deux fonctions hydroxyles dont au moins une fonction hydroxyle primaire est nettement inférieur aux enthalpies de déshydrogénation des vecteurs LOHC décrits dans l'état de l'art. Ainsi, cette réaction de déshydrogénation ne consomme que 10% à 12,5% du PCS de l'hydrogène libéré (contre 17% à 25% dans le cas des LOHC décrits dans l'état de l'art), ce qui rend les composés aliphatiques selon l'invention particulièrement attractifs.

Les conditions opératoires du réacteur sont ajustables selon la nature du couple LOHC déshydrogéné/LOHC hydrogéné considéré.

D'une manière générale la réaction de déshydrogénation est réalisée à une température variant de 110 à 320°C.

La pression peut varier de 1 à 2 bar (ou 0,1 à 0,2 MPa).

Bien entendu, le couple pression et température est ajusté selon la nature du couple LOHC déshydrogéné/LOHC hydrogéné.

Le choix de ce catalyseur est également réalisé en tenant compte de la nature du couple LOHC déshydrogéné/LOHC hydrogéné.

Le tableau 3 ci-après suggère ainsi des catalyseurs efficaces pour réaliser les déshydrogénations précisées également dans ce tableau.

[Tableau 3]

| LOHC hydrogéné | catalyseur | LOHC déshydrogéné |
|---|---|---|
| 1,4-butanediol (BDO) | Cu-Zn-Zr-Al-O ou $CuO/Cr_2O_3$ | γ-butyrolactone (GBL) |
| 1,4-butanediol | $SiO_2$ | 4-hvdroxvbutanal |
| 1,4-pentanediol (PDO) | Cu-Zn-Al ou $CuO/Cr_2O_3$ | γ-valerolactone (GVL) |
| 1,5-pentanediol | $CuO/Cr_2O_3$ | δ-valerolactone |
| 1,5-pentanediol | Cu-Zn-Zr-Al-O ou $CuO/Cr_2O_3$ | Alcool furfurylique |
| 1,6-hexanediol | Homogène Ru | ε-caprolactone |

Dans le cas du 1,4 butanediol et du 1,4 pentanediol cette hydrogénation peut être plus précisément réalisée dans les conditions opératoires illustrées ci-après.

[Chem 2]

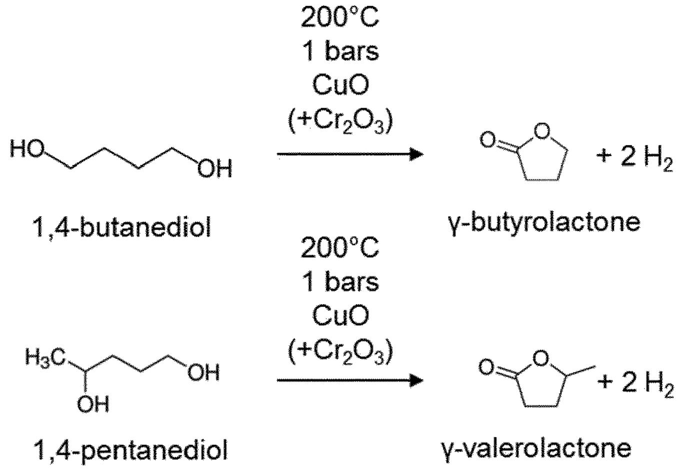


1,4-butanediol γ-butyrolactone

1,4-pentanediol γ-valerolactone

APPLICATIONS

L'ensemble des composés considérés selon l'invention, qu'il s'agisse des composés aliphatiques dits pauvres en atomes d'hydrogène comme par exemple les γ-butyrolactone et γ-valerolactone ou des composés aliphatiques dits riches en atomes d'hydrogène comme par exemple les 1,4 butanediol et 1,4 pentanediol, sont des liquides organiques connus et déjà utilisés en tant que solvants en chimie fine. Ainsi les infrastructures pour les transporter existent déjà.

Par ailleurs, il s'agit de composés stables dans les conditions normales de température et de pression, ce qui permet d'envisager leur transport dans des containers standards ou citernes qui peuvent être chargés sur des bateaux, trains ou camions en fonction des contextes.

Les applications directes d'un composé aliphatique possédant au moins deux groupements hydroxyles dont au moins un groupement hydroxyle primaire, conforme à l'invention sont le transport et le stockage d'hydrogène.

Le composé aliphatique dit riche en atomes d'hydrogène conforme à l'invention, transporté et stocké jusqu'au lieu d'utilisation de l'hydrogène, est transformé par déshydrogénation en un composé aliphatique déshydrogéné et en hydrogène, notamment par une déshydrogénation catalytique telle que détaillé précédemment.

L'hydrogène produit peut alors être utilisé en tant que réactif dans un procédé industriel (hydrodésulfuration, hydrogénation de différents composés, valorisation du $CO_2$ en carburants gazeux ou liquides ...). En particulier, l'hydrogène généré par déshydrogénation catalytique du LOHC hydrogéné peut être utilisé dans des procédés d'hydrogénation. Il peut par exemple être mis en œuvre dans des réactions chimiques de réduction, notamment dans des réactions chimiques de réduction catalytiques.

Avantageusement, l'hydrogène issu du LOHC hydrogéné peut être utilisé dans un procédé d'hydrogénation de coupes pétrolières notamment de coupes pétrolières lourdes pour les transformer en carburants tel que le diesel ou le kérosène. Ce type de procédé est généralement opéré dans des unités d'hydrocraquage.

Avantageusement, l'hydrogène issu du LOHC hydrogéné peut également être utilisé dans un procédé industriel de méthanation, notamment catalytique ou biologique, pour générer du méthane par réaction d'hydrogénation de monoxyde de carbone ou de dioxyde de carbone.

Le LOHC hydrogéné est mis en œuvre pour générer l'hydrogène de la réaction d'hydrogénation requise. Parmi les procédés de méthanation adaptés à une telle utilisation peuvent être cités les procédés de conversion d'électricité en gaz (PtG ou P2G, « *power to gas* ») ou en liquide (PtL ou P2L, « power to liquide). Une telle utilisation présente l'avantage de pouvoir générer de l'hydrogène à partir du LOHC hydrogéné directement sur un site émetteur de $CO_2$ afin de transformer celui-ci en méthane, et réduire les émissions de CO2 sur le site sans nécessiter de stockage et de transport intermédiaire du $CO_2$ émis ou l'installation d'une unité de production d'hydrogène sur le même site.

Par ailleurs, et de manière préférée, l'hydrogène produit peut également être utilisé en tant que vecteur énergétique décarboné soit par combustion soit en alimentant un dispositif de conversion d'énergie électrochimique.

Ainsi et comme énoncé précédemment, l'invention concerne tout particulièrement, l'utilisation dans un dispositif de conversion d'énergie électrochimique ou par combustion d'au moins un composé aliphatique possédant au moins deux groupements hydroxyles dont au moins un groupement hydroxyle primaire tel que décrit précédemment (dit LOHC hydrogéné), à titre de source renouvelable en hydrogène.

Pour mémoire, un dispositif de conversion d'énergie électrochimique est un dispositif apte à convertir de l'énergie chimique en énergie électrique.

Ainsi l'invention concerne l'utilisation d'au moins un composé aliphatique possédant au moins deux groupements hydroxyles dont au moins un groupement hydroxyle primaire tel que décrit précédemment (dit LOHC hydrogéné), à titre de source renouvelable en hydrogène dans un dispositif de conversion d'énergie électrochimique notamment choisi parmi les piles à combustible, de préférence les piles à combustible à membrane d'échange de protons ou à oxyde solide.

Pour sa part, un dispositif de conversion d'énergie par combustion est un dispositif qui permet de convertir de l'énergie chimique en énergie thermique (puis éventuellement en énergie mécanique ou électrique).

Ainsi l'invention concerne également l'utilisation d'au moins un composé aliphatique possédant au moins deux groupements hydroxyles dont au moins un groupement hydroxyle primaire tel que décrit précédemment (dit LOHC hydrogéné), à titre de source renouvelable en hydrogène dans un dispositif de conversion d'énergie par combustion notamment choisi parmi les moteurs thermiques alimentés par de l'hydrogène tels que les moteurs de voitures à hydrogène, les moteurs à réaction tels que les moteurs de fusée, des chaudières alimentées par de l'hydrogène ou encore des centrales électriques basés sur une combustion de l'hydrogène. Plus précisément, il est réalisé au sein de ces deux types de dispositif, une conversion de l'énergie d'oxydation de l'hydrogène en énergie soit électrique soit thermique.

Dans l'ensemble des utilisations considérées selon l'invention, cet hydrogène est lui-même généré par déshydrogénation, en particulier par déshydrogénation catalytique, d'un composé aliphatique conforme à l'invention dit LOHC hydrogéné.

Lorsque ce composé aliphatique, mis en œuvre à titre de LOHC hydrogéné, est déshydrogéné catalytiquement, un LOHC déshydrogéné y est généré conjointement à l'hydrogène. La nature du LOHC déshydrogéné formé varie bien entendu avec la nature du LOHC hydrogéné mis en œuvre. De préférence, le LOHC déshydrogéné est un composé choisi parmi les γ-butyrolactone (GBL), anhydride succinique, γ-valerolactone (GVL), lévulinate de méthyle, δ-valerolactone, alcool furfurylique, 2-hydroxytetrahydropyrane, ε-caprolactone et 1,2,6-hexanetriol.

Cette déshydrogénation catalytique met en particulier en œuvre au moins un couple LOHC déshydrogéné/LOHC hydrogéné tels que décrits précédemment. Par exemple, ce couple LOHC déshydrogéné/LOHC hydrogéné peut être choisi parmi les γ-butyrolactone (GBL)/1,4-butanediol (BDO), Anhydride succinique/1,4-butanediol, γ-valerolactone (GVL)/1,4-pentanediol (PDO), lévulinate de méthyle/1,4-pentanediol, δ-valerolactone/1,5-pentanediol, alcool furfurylique/1,5-pentanediol, 2-hydroxytetrahydropyrane/1,5-pentanediol, ε-caprolactone/1,6-hexanediol et 1,2,6-hexanetriol/1,6-hexanediol.

Selon un mode de réalisation préféré, la déshydrogénation met en œuvre du 1,4-butanediol (BDO) qui est déshydrogéné en γ-butyrolactone en présence d'un catalyseur Cu-Zn-Zr-Al-O ou $CuO/Cr_2O_3$.

Selon un autre mode de réalisation préféré, la déshydrogénation met en œuvre du 1,4-pentanediol (PDO) qui est déshydrogéné en γ-valerolactone en présence d'un catalyseur Cu-Zn-Al ou $CuO/Cr_2O_3$.

Avantageusement, le composé aliphatique mis en œuvre à titre de LOHC hydrogéné, est mis en œuvre sous une forme individualisée. En d'autres termes, le composé aliphatique n'est pas introduit sous la forme d'un mélange, formé ou non au préalable, avec un ou plusieurs composés annexes. Un tel mélange est notamment considéré dans le document Kumar et al. (JACS, 2018).

Enfin, les propriétés liquides de ces composés organiques en font de bons candidats pour être utilisés en tant que carburants pour des moteurs thermiques ou des dispositifs de conversion d'énergie électrochimique.

Ils sont compatibles avec un conditionnement dans le réservoir d'un véhicule où la déshydrogénation peut être réalisée afin de produire de l'hydrogène alimentant le véhicule. Une fois déshydrogéné, le LOHC peut être stocké pour être ultérieurement déchargé en échange d'un LOHC hydrogéné conforme à l'invention.

Les exemples ci-après sont présentés à titre illustratif et non limitatif du domaine de l'invention.

## Exemple 1

Stockage de l'hydrogène par un LOHC conforme à l'invention

Pour ce faire, un LOHC pauvre en atomes d'hydrogène est préchauffé à la température de la réaction, mélangé à l'hydrogène et injecté dans un réacteur lit fixe isotherme chargé en catalyseur. A la sortie du réacteur, les liquides produits sont séparés de l'hydrogène non réagi par une séparation gaz/liquide, et l'hydrogène peut être avantageusement recyclé en entrée du réacteur. Les conditions opératoires, la nature du couple LOHC déshydrogéné/LOHC hydrogéné et la nature du catalyseur sont explicitées dans le Tableau 4 ci-après.

[Tableau 4]

| LOHC déshydrogéné | LOHC hydrogéné | Catalyseur | Pression (bar) | Température (°C) | GHSV* (NmL/$g_{c\ ata}$/h) |
|---|---|---|---|---|---|
| γ-butyrolactone | 1,4-butanediol | Cu/ZnO ou $ZnCl_2$ | 40-250 | 150-190 | 5000 |
| Anhydride succinique | 1,4-butanediol | Ni + Cu/ZnO | 80-280 | 120-200 | |
| γ-valerolactone | 1,4-pentanediol | Cu/ZnO ou $Cu/ZrO_2$ | 15-60 | 140-240 | 5400 |
| Lévulinate de méthyle | 1,4-pentanediol | $Cu/ZrO_2$ | | 160-240 | |
| δ-valerolactone | 1,5-pentanediol | $CuO/Cr_2O_3$ | 40-150 | 100-250 | |
| Alcool furfurylique | 1,5-pentanediol | $Cu/Cr_2O_4$ ou Cu-$Mg_3AlO_{4,5}$ | 150 | 275 | |
| 2-hydroxytetrahydropyrane | 1,5-pentanediol | $Cu/Cr_2O_4$ | 130 | 100 | |
| ε-capro\|actone | 1,6-hexanediol | $CuO/Cr_2O_3$ (+MnO, BaO) | 40-220 | 180-240 | |
| 1,2,6-hexanetriol | 1,6-hexanediol | CuCr | 10-80 | 260 | |
| *GaseHourlySpaceVelocity pour vitesse spatiale horaire de gaz | | | | | |

La teneur massique en $H_2$ et la densité volumétrique sont calculées selon les conventions détaillées précédemment. Le tableau 5 renseigne les valeurs calculées.

[Tableau 5]

| LOHC de transport | Teneur massique en $H_2$ (%) | Densité volumétrique (g/L) |
|---|---|---|
| 1,4-butanediol | 4,5 | 47 |
| 1,4-pentanediol | 3,9 | 38,2 |
| 1,5-pentanediol | 3,9 | 38,5 |
| 1,6-hexanediol | 3,4 | 32,9 |

**Exemple 2**

Déstockage de l'hydrogène à partir d'un LOHC conforme à l'invention

Le LOHC riche en atomes d'hydrogène est préchauffé à la température de la réaction et injecté dans un réacteur lit fixe rempli de catalyseur. A la sortie du réacteur, les liquides produits sont séparés de l'hydrogène par séparation gaz/liquide, une partie des liquides produits peut avantageusement être recyclée en entrée du réacteur.

Les conditions opératoires, la nature du couple LOHC déshydrogéné/LOHC hydrogéné et la nature du catalyseur sont explicitées dans le tableau 6 ci-après.

[Tableau 6]

| LOHC hydrogéné | LOHC déshydrogéné | Catalyseur | Pression (bar) | Température (°C) | LHSV* (mL/$gc_{ata}$/h) |
|---|---|---|---|---|---|
| 1,4-butanediol | γ-butyrolactone | Cu-Zn-Zr-Al-O ou $CuO/Cr_2O_3$ | 1-2 | 200-300 | 12 |
| 1,4-butanediol | 4-hydroxybutanal | $SiO_2$ | 1-2 | 320 | |
| 1,4-pentanediol | γ-valerolactone | Cu-Zn-Al ou $CuO/Cr_2O_3$ | 1-2 | 200-250 | |
| 1,5-pentanediol | δ-valerolactone | $CuO/Cr_2O_3$ | 1-2 | 200-250 | 69 |
| 1,6-hexanediol | ε-caprolactone | Homogène Ru | 1-2 | 117 | |
| *LiquidHourlySpaceVelocity pour vitesse spatiale horaire liquide | | | | | |

Le niveau des enthalpies observées pour la déshydrogénation des LOHC aliphatiques comportant au moins deux fonctions hydroxyles est nettement inférieur aux enthalpies de déshydrogénation des vecteurs LOHC décrits dans l'état de l'art. Ainsi, cette réaction de déshydrogénation ne consomme que 10% à 12,5% du PCS de l'hydrogène libéré (contre 17% à 25% dans le cas des LOHC décrits dans l'état de l'art) ce qui rend ces vecteurs particulièrement attractifs.

**Liste des documents cités**

Ref 1 P. T. Aakko-saksa, C. Cook, J. Kiviaho, T. Repo, J. Power Sources 2018, 396, 803-823.

Ref 2 K. Morawa Eblagon, D. Rentsch, O. Friedrichs, A. Remhof, A. Zuettel, A. J. Ramirez-Cuesta, S. C. Tsang, Int. J. Hydrogen Energy 2010, 35, 11609-11621.

**Revendications**

1. Utilisation dans des dispositifs de conversion d'énergie électrochimique ou par combustion, dans un procédé industriel de méthanation ou un procédé d'hydrogénation de coupes pétrolières, d'au moins un composé aliphatique possédant au moins deux groupements hydroxyles dont au moins un groupement hydroxyle primaire (dit LOHC hydrogéné), à titre de source renouvelable en hydrogène.

2. Utilisation selon la revendication 1 dans laquelle ledit composé aliphatique possède une enthalpie de déshydrogénation inférieure à 45 kJ/mol$H_2$, de préférence inférieure à 40 kJ/mol$H_2$.

3. Utilisation selon la revendication 1 ou 2 dans laquelle ledit composé aliphatique possède une densité volumétrique de l'hydrogène allant de 30 g/L à 50 g/L.

4. Utilisation selon l'une quelconque des revendications précédentes dans laquelle ledit composé aliphatique est un composé aliphatique saturé en $C_3$ à $C_{12}$ et plus particulièrement en $C_4$ à $C_6$.

5. Utilisation selon l'une quelconque des revendications précédentes dans laquelle ledit composé aliphatique possède un unique groupement hydroxyle primaire.

6. Utilisation selon l'une quelconque des revendications précédentes dans laquelle ledit composé aliphatique possède un groupement hydroxyle primaire et un groupement hydroxyle secondaire.

7. Utilisation selon l'une quelconque des revendications 1 à 4 dans laquelle ledit composé aliphatique possède uniquement deux groupements hydroxyles primaires.

8. Utilisation selon l'une quelconque des revendications précédentes dans laquelle ledit composé aliphatique est choisi

parmi les 1,4-butanediol, 1,4-pentanediol, 1,5-pentanediol et 1,6-hexanediol et de préférence est le 1,4-butanediol.

**9.** Utilisation selon l'une quelconque des revendications précédentes, dans laquelle l'hydrogène est généré par déshydrogénation catalytique dudit composé aliphatique (LOHC hydrogéné).

**10.** Utilisation selon la revendication précédente, dans laquelle un LOHC déshydrogéné est généré conjointement à l'hydrogène par la déshydrogénation catalytique, ledit LOHC déshydrogéné étant choisi parmi les γ-butyrolactone (GBL), anhydride succinique, γ-valerolactone (GVL), lévulinate de méthyle, δ-valerolactone, alcool furfurylique, 2-hydroxytetrahydropyrane, ε-caprolactone et 1,2,6-hexanetriol.

**11.** Utilisation selon l'une quelconque des revendications 9 ou 10, dans laquelle la déshydrogénation met en œuvre du 1,4-butanediol (BDO) qui est déshydrogéné en γ-butyrolactone en présence d'un catalyseur Cu-Zn-Zr-Al-O ou $CuO/Cr_2O_3$.

**12.** Utilisation selon l'une quelconque des revendications 9 ou 10, dans laquelle la déshydrogénation met en œuvre du 1,4-pentanediol (PDO) qui est déshydrogéné en γ-valerolactone en présence d'un catalyseur Cu-Zn-Al ou $CuO/Cr_2O_3$.

**13.** Utilisation selon l'une quelconque des revendications précédentes, dans laquelle ledit composé aliphatique est mis en œuvre sous une forme individualisée.

**14.** Utilisation selon l'une quelconque des revendications précédentes, dans un dispositif de conversion d'énergie électrochimique, notamment choisi parmi les piles à combustible, de préférence les piles à combustible à membrane d'échange de protons ou à oxyde solide.

**15.** Utilisation selon l'une quelconque des revendications 1 à 13, dans un dispositif de conversion d'énergie par combustion, notamment choisi parmi les moteurs thermiques alimentés par de l'hydrogène tels que les moteurs de voitures à hydrogène, les moteurs à réaction tels que les moteurs de fusée, des chaudières alimentées par de l'hydrogène ou encore des centrales électriques basés sur une combustion de l'hydrogène.

**16.** Utilisation selon l'une quelconque des revendications 1 à 13 dans un procédé d'hydrogénation de coupes pétrolières, en particulier de coupes pétrolières lourdes, pour les transformer en carburants tels que le diesel ou le kérosène.

**17.** Utilisation selon l'une quelconque des revendications précédentes dans un procédé industriel de méthanation, notamment catalytique ou biologique, pour générer du méthane par réaction d'hydrogénation de monoxyde de carbone ou de dioxyde de carbone.

Europäisches Patentamt
European Patent Office
Office européen des brevets

# RAPPORT DE RECHERCHE EUROPEENNE

Numéro de la demande
EP 20 16 9885

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | AMIT KUMAR ET AL: "Selective Hydrogenation of Cyclic Imides to Diols and Amines and Its Application in the Development of a Liquid Organic Hydrogen Carrier", JOURNAL OF THE AMERICAN CHEMICAL SOCIETY, vol. 140, no. 24, 20 juin 2018 (2018-06-20), pages 7453-7457, XP055652392, ISSN: 0002-7863, DOI: 10.1021/jacs.8b04581 * le document en entier * ----- | 1-6,8, 10,13-17 | INV. C01B3/00 C01B3/22 |
| Y | GHOSH AVIK ET AL: "H2-release from alcohols, diols, and compounds with amino functionality promoted by titanium(II) sandwich complex, [Cp2Ti]: a theoretical approach", STRUCTURAL CHEMISTRY, SPRINGER US, NEW YORK, vol. 30, no. 3, 8 novembre 2018 (2018-11-08), pages 681-690, XP036779195, ISSN: 1040-0400, DOI: 10.1007/S11224-018-1207-0 [extrait le 2018-11-08] * abrégé * * "Elimination of one equivalent of H2 from ethylene glycol"; page 687 * ----- | 1,5-7,9, 13-17 | |
| Y | US 2010/055513 A1 (SOLOVEICHIK GRIGORII LEV [US]) 4 mars 2010 (2010-03-04) * abrégé * * alinéas [0025], [0029] * * revendications 1,5,19,21 * ----- | 1-10,13, 14 | |
| | -/-- | | |

| | DOMAINES TECHNIQUES RECHERCHES (IPC) |
|---|---|
| | C01B C07C |

Le présent rapport a été établi pour toutes les revendications

1

| Lieu de la recherche | Date d'achèvement de la recherche | Examinateur |
|---|---|---|
| Munich | 6 août 2020 | Alvarez Rodriguez, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches Patentamt
European Patent Office
Office européen des brevets

# RAPPORT DE RECHERCHE EUROPEENNE

Numéro de la demande
EP 20 16 9885

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | WO 2017/182136 A1 (LINDE AG [DE]) 26 octobre 2017 (2017-10-26) * abrégé * ----- | 1-10,13, 15 | |
| Y | DE 10 2017 113027 A1 (N ERGIE AG [DE]) 13 décembre 2018 (2018-12-13) * revendications 1,14 * ----- | 1-10,13, 17 | |
| A | PENG HU ET AL: "A novel liquid organic hydrogen carrier system based on catalytic peptide formation and hydrogenation", NATURE COMMUNICATIONS, vol. 6, no. 1, 17 avril 2015 (2015-04-17), XP055652417, DOI: 10.1038/ncomms7859 * abrégé * * page 2, colonne gauche * * figures 1-c, 1-d * * tableau 1 * ----- | 1-17 | |
| A | US 2017/283257 A1 (MILSTEIN DAVID [IL] ET AL) 5 octobre 2017 (2017-10-05) * abrégé * ----- | 1-17 | DOMAINES TECHNIQUES RECHERCHES (IPC) |

Le présent rapport a été établi pour toutes les revendications

1

| Lieu de la recherche | Date d'achèvement de la recherche | Examinateur |
|---|---|---|
| Munich | 6 août 2020 | Alvarez Rodriguez, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE RELATIF A LA DEMANDE DE BREVET EUROPEEN NO.** EP 20 16 9885

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-08-2020

| Document brevet cité au rapport de recherche | Date de publication | Membre(s) de la famille de brevet(s) | Date de publication |
|---|---|---|---|
| US 2010055513 A1 | 04-03-2010 | AUCUN | |
| WO 2017182136 A1 | 26-10-2017 | DE 102016004684 A1 | 19-10-2017 |
| | | WO 2017182136 A1 | 26-10-2017 |
| DE 102017113027 A1 | 13-12-2018 | DE 102017113027 A1 | 13-12-2018 |
| | | EP 3415609 A1 | 19-12-2018 |
| US 2017283257 A1 | 05-10-2017 | AU 2015310503 A1 | 06-04-2017 |
| | | CA 2959873 A1 | 10-03-2016 |
| | | CN 107001032 A | 01-08-2017 |
| | | EP 3189006 A1 | 12-07-2017 |
| | | JP 2017528409 A | 28-09-2017 |
| | | KR 20170052618 A | 12-05-2017 |
| | | US 2017283257 A1 | 05-10-2017 |
| | | WO 2016035081 A1 | 10-03-2016 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20170283257 A
- US 8338055 B
- US 4048193 A


### Littérature non-brevet citée dans la description


- **KUMAR et al.** *JACS,* 2018
- **P. T. AAKKO-SAKSA ; C. COOK ; J. KIVIAHO ; T. REPO.** *J. Power Sources,* 2018, vol. 396, 803-823
- **K. MORAWA EBLAGON ; D. RENTSCH ; O. FRIEDRICHS ; A. REMHOF ; A. ZUETTEL ; A. J. RAMIREZ-CUESTA ; S. C. TSANG.** *Int. J. Hydrogen Energy,* 2010, vol. 35, 11609-11621